Europäisches Patentamt

European Patent Office

Office européen des brevets

(11) Numéro de publication : **0 109 896**
**B1**

(12) **FASCICULE DE BREVET EUROPÉEN**

(45) Date de publication du fascicule du brevet :
**30.07.86**

(21) Numéro de dépôt : **83402195.8**

(22) Date de dépôt : **15.11.83**

(51) Int. Cl.⁴ : **F 16 C 39/06, H 02 K 7/09**

(54) **Palier électromagnétique pour environnement à haute témperature.**

(30) Priorité : **16.11.82 FR 8219168**

(43) Date de publication de la demande :
**30.05.84 Bulletin 84/22**

(45) Mention de la délivrance du brevet :
**30.07.86 Bulletin 86/31**

(84) Etats contractants désignés :
**CH DE GB IT LI SE**

(56) Documents cités :
**FR-A- 2 336 603**

(73) Titulaire : **SOCIETE EUROPEENNE DE PROPULSION**
**Société Anonyme dite:**
**3, Avenue du Général de Gaulle**
**F-92800 Puteaux (FR)**

(72) Inventeur : **Battarel, André**
**12 rue de la Briqueterie St Marcel**
**F-27200 Vernon (FR)**
Inventeur : **Lequin, Claude**
**47 rue Ste Catherine**
**F-27200 Vernon (FR)**

(74) Mandataire : **Thevenet, Jean-Bruno et al**
**Cabinet BEAU DE LOMENIE 55 rue d'Amsterdam**
**F-75008 Paris (FR)**

## Description

La présente invention a pour objet un palier électromagnétique destiné à être placé dans un environnement à haute température et comprenant des électroaimants constitués chacun d'au moins un bobinage formé de conducteurs moulés dans un ciment haute température et d'une armature en matériau ferromagnétique.

La structure d'un palier magnétique est désormais bien connue, et les applications des paliers magnétiques ne cessent de s'étendre. Pour certaines conditions particulières de fonctionnement, la structure classique des paliers magnétiques ne s'avère pas entièrement satisfaisante et présente certaines fragilités.

C'est notamment le cas lorsqu'un palier magnétique doit être utilisé dans une machine au sein de laquelle règnent des températures élevées. Par exemple, dans une soufflante à hélium chaud, qui constitue une partie d'un réacteur à haute température, l'extrémité d'un arbre peut être portée à des températures de l'ordre de 1 000 °C et les paliers sont eux-mêmes portés à des températures comprises entre environ 400 et 500 °C. Pour de telles conditions de fonctionnement, on a déjà tenté de mouler des bobinages dans un ciment haute température afin de réaliser un bloc massif résistant mieux à l'action de la chaleur. Sous l'action de chocs thermiques répétés, le bloc de ciment tend cependant à se fissurer, et des court-circuits peuvent alors se produire au sein du bobinage dont les fils ne possèdent qu'une isolation assez fragile.

La présente invention a précisément pour objet de remédier aux inconvénients précités et de permettre la réalisation de paliers magnétiques fonctionnant de façon sûre même s'ils sont placés dans un milieu ambiant à température élevée.

Ces buts sont atteints grâce au fait que, selon l'invention, chaque bobinage est réalisé par tissage et comprend une chaîne constituée à partir d'au moins un fil conducteur isolé et une trame constituée à partir d'un ruban en matériau isolant.

La réalisation d'un bobinage tissé, pour lequel les différentes spires d'un même fil conducteur sont maintenues les unes par rapport aux autres dans des positions relatives bien déterminées, et sans être en contact les unes avec les autres, permet d'éviter de façon sûre des court-circuits, même si, sous l'action de chocs thermiques ou mécaniques, le bloc de ciment se fissure ou si la couche isolante des fils du bobinage est endommagée.

Ainsi, le fil de chaîne et le ruban de trame du bobinage sont tissés de façon lâche afin de ménager des interstices facilitant la pénétration du ciment de moulage.

Le fil conducteur isolé est avantageusement constitué par un fil de cuivre nickelé isolé par une couche de céramique, qui peut en outre être recouvert d'une couche de vernis destinée à éviter le détachement de la couche de céramique lors de l'opération de bobinage.

Le ruban en matériau isolant peut être constitué par un souplisso en fibre de verre.

Le bobinage selon l'invention se prête facilement à une réalisation à l'aide d'un ensemble de plusieurs fils groupés et connectés en parallèle, et présentés par exemple sous la forme d'un toron, qui est tissé avec le ruban isolant. Une céramique formant buvard, ou une autre matière résistant bien à la chaleur telle que de la laine de verre, peut être en outre disposée sur les parties latérales du bobinage entre les extrémités du ruban isolant.

D'autres caractéristiques et avantages de l'invention ressortiront de la description qui fait suite d'un mode particulier de réalisation, en référence au dessin annexé, sur lequel :

la figure 1 représente une vue en perspective d'une partie de tissu de bobinage de palier électromagnétique selon l'invention,

la figure 2 est une vue schématique de dessus du tissu de bobinage de la figure 1,

la figure 3 est une section d'un ruban utilisable dans le tissage du bobinage des figures 1 et 2,

la figure 4 est une section d'un fil conducteur utilisable dans le bobinage des figures 1 et 2,

la figure 5 est une vue en perspective et en coupe selon la ligne V-V de la figure 6,

la figure 6 est une vue schématique dans un plan radial, d'un exemple de palier électromagnétique auquel est applicable l'invention, et

la figure 7 est une vue partielle schématique montrant une variante de réalisation de la figure 1 avec des ensembles de fils conducteurs groupés.

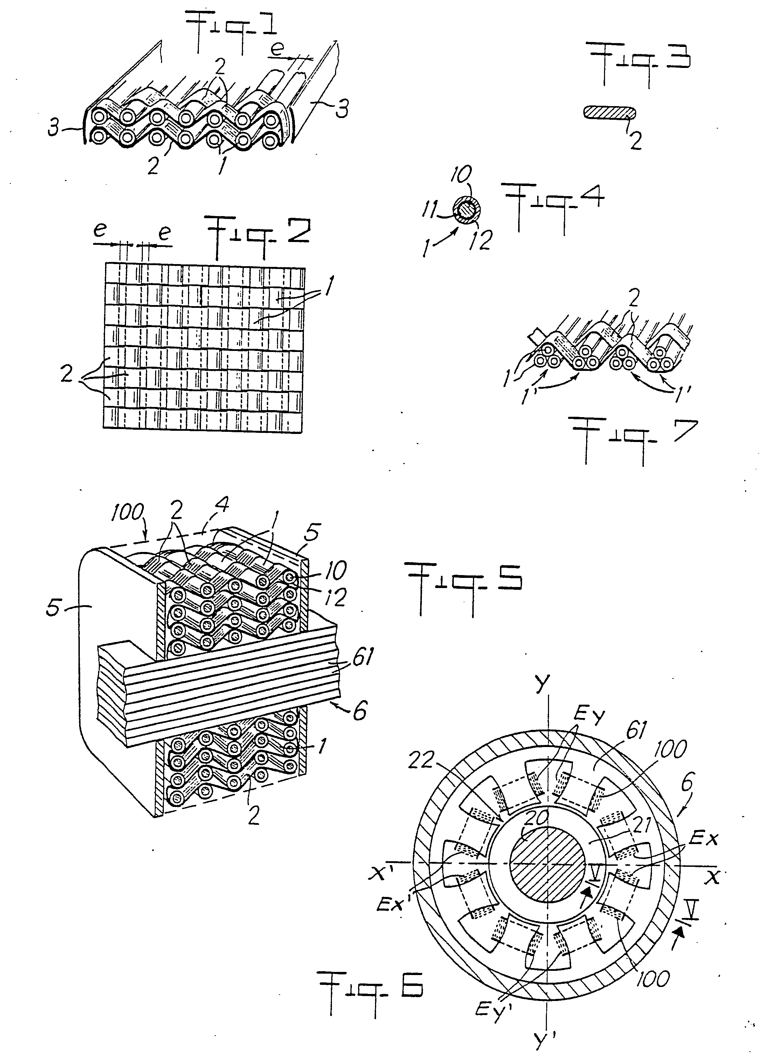

La figure 1 montre le principe de réalisation d'un bobinage tissé, conformément à l'invention. Un fil conducteur isolé 1 forme une chaîne tandis qu'un ruban isolant 2 constitue la trame du tissu formé par l'entrelacement du fil 1 et du ruban 2. Le tissage est relativement lâche et un espace e est ménagé entre deux spires adjacentes du fil conducteur 1 de manière à réaliser des interstices facilitant la pénétration d'un ciment d'enrobage destiné à permettre la réalisation d'un bloc massif autour du tissu. Toutefois, même en cas de fissuration de ce bloc massif, le tissu formé maintient des distances e à peu près fixes entre deux spires adjacentes du fil conducteur 1 de sorte que celles-ci ne peuvent jamais venir en contact les unes avec les autres. En pratique, les différentes spires adjacentes d'une couche sont réalisées successivement à partir d'un même fil ou ensemble de fils et le ruban 2 est chaque fois intercalé entre deux portions de fil adjacentes.

Le ruban isolant 2 utilisé comme fil de trame destiné à maintenir les spires du fil conducteur 1 dans des positions respectives bien déterminées peut être constitué par un souplisso en fibre de verre tressée. Le ruban 2 présente une épaisseur de l'ordre de quelques dixièmes de millimètre, par exemple 0,5 mm, et une largeur de l'ordre de quelques millimètres, par exemple, 2 mm (voir figure 3).

Le fil conducteur 1 (figure 4) est avantageusement constitué par une âme 10 en cuivre revêtue d'une couche 11 de nickel elle-même entourée d'une couche isolante 12 de céramique. Un vernis peut en outre être disposé sur la couche isolante 12 afin d'éviter le détachement de celle-ci lors de l'opération de bobinage. Le diamètre de l'âme 10, 11 en cuivre nickelé du fil 1 est de l'ordre de quelques dixièmes de millimètres et reste de préférence inférieur à un millimètre. Dans le cas où des puissances importantes sont nécessaires, plusieurs fils 1, sont groupés en parallèle et forment une unité 1′ (voir figure 7). On peut ainsi facilement éviter l'utilisation de fils conducteurs de trop gros diamètre qui sont toujours difficiles à bobiner et il est ainsi possible de réduire le rayon de courbure du bobinage 100.

La figure 5 permet de voir un bobinage 100 à plusieurs couches de fil conducteur isolé 1 entrelacé avec un ruban plat isolant 2 qui maintient un écartement prédéterminé entre deux spires adjacentes réalisées à partir du fil conducteur isolé 1. Le bobinage 100, réalisé autour d'une armature 6 composée d'un empilement de tôles ferromagnétiques 61, est moulé dans un ciment haute température 4 qui, du fait des interstices présents entre les différents fils 1 maintenus écartés par le ruban 2, peut se répartir également dans tout le bobinage.

En cas de chocs thermiques répétés, le surmoulage 4 se fissure, mais le tissage permet quand même une bonne tenue mécanique de la bobine et la conservation d'un bon isolement même si la couche céramique 12 du fil 1 est partiellement détériorée. Le tissage assure en effet en permanence la cohésion du bloc massif 4, même lorsque celui-ci est fissuré. Ainsi, la présente invention permet l'utilisation de fils conducteurs isolés ordinaires, même relativement fragiles, et susceptibles de voir leur isolation en céramique endommagée sous l'action des chocs thermiques, sans que cela réagisse sur le bon fonctionnement de l'ensemble du fait des écartements qui sont maintenus en permanence entre les spires du fil 1 du bobinage 100.

Dans les parties latérales du bobinage, notamment au voisinage des parois latérales 5 de l'enrobage 4 (figure 5), un buvard céramique 3 (figure 1) peut être inséré pour augmenter la qualité de l'isolation. Un autre matériau résistant bien à la chaleur, tel que de la laine de verre, peut également être utilisé.

Comme cela a déjà été indiqué, lors de la réalisation du tissage, il est possible d'utiliser un même fil conducteur isolé 1 ou un même groupe 1′ de fils 1 connectés en parallèle, pour non seulement former des portions de fil adjacentes d'une même couche, mais également réaliser successivement plusieurs couches superposées du bobinage. Les spires de chaque couche peuvent alors être décalées par rapport aux spires correspondantes des couches adjacentes.

La figure 6 montre, dans un plan radial d'un arbre 20 portant une armature annulaire 22 constituée de tôles feuilletées 21, un stator de palier électromagnétique comportant une armature 6 composée de tôles feuilletées 61 et présentant quatre paires Ex, Ex′, Ey, Ey′, de pôles autour desquels sont enroulés des bobinages 100 réalisés conformément à l'invention. Chacun des bobinages 100 peut être composé de plusieurs couches de fil 1 tissées avec un ruban plat 2, comme montré sur la figure 5. L'ensemble du palier électromagnétique est alors adapté pour résister à des températures très élevées.

**Revendications**

1. Palier électromagnétique destiné à être placé dans un environnement à haute température, comprenant des électroaimants constitués chacun d'au moins un bobinage (100) formé de conducteurs (1) moulés dans un ciment haute température et d'une armature (6) en matériau ferromagnétique, caractérisé en ce que chaque bobinage (100) est réalisé par tissage et comprend une chaîne constituée à partir d'au moins un fil conducteur isolé (1) et une trame constituée à partir d'un ruban en matériau isolant (2).

2. Palier électromagnétique selon la revendication 1, caractérisé en ce que le fil conducteur isolé (1) est constitué par un fil de cuivre nickelé (10, 11) isolé par une couche de céramique (12).

3. Palier électromagnétique selon la revendication 1 ou la revendication 2, caractérisé en ce que le ruban en matériau isolant (2) est constitué par un soupliso en fibre de verre.

4. Palier électromagnétique selon l'une quelconque des revendications 1 à 3, caractérisé en ce que la chaîne du bobinage (100) est réalisée à partir d'un ensemble (1′) de plusieurs fils groupés et connectés en parallèle (1).

5. Palier électromagnétique selon l'une quelconque des revendications 1 à 4, caractérisé en ce que le fil conducteur isolé (1) comprend une âme conductrice (10, 11) dont le diamètre est inférieur ou égal à 1 mm.

6. Palier électromagnétique selon l'une quelconque des revendications 1 à 5, caractérisé en ce que le ruban isolant (2) présente une épaisseur de l'ordre de quelques dixièmes de millimètres et une largeur de l'ordre de quelques millimètres.

7. Palier électromagnétique selon l'une des revendications 1 à 6, caractérisé en ce que de la céramique (3) en forme de buvard ou de la laine de verre est en outre disposée sur les parties latérales du bobinage (100) entre les extrémités du ruban isolant (2).

8. Palier électromagnétique selon la revendication 2, caractérisé en ce que le fil de cuivre nickelé (1) isolé par une couche de céramique est recouvert d'une couche de vernis destiné à éviter le détachement de la couche de céramique lors de l'opération de bobinage.

9. Palier électromagnétique selon l'une quelconque des revendications 1 à 8, caractérisé en ce que le fil de chaîne (1) et le ruban de trame (2) du bobinage (100) sont tissés de façon lâche afin de ménager des interstices facilitant la pénétration du ciment de moulage.

## Claims

1. Electromagnetic bearing adapted to be fitted inside a high temperature environment, comprising electromagnets, each composed of at least a coil (100) made of wires (1) embedded in a high temperature cement, and of an armature in ferromagnetic material, characterized in that each coil (100) is produced by weaving and comprises a warp constituted from at least one insulated conducting wire (1) and a weft constituted from a strip of insulating material (2).

2. Electromagnetic bearing according to claim 1, characterized in that the insulated conducted wire (1) is constituted by a nickel-plated copper wire (10, 11) insulated by a ceramic layer (12).

3. Electromagnetic bearing according to claim 1 or 2, characterized in that the strip of insulating material (2) is constituted by glass-fiber tubing.

4. Electromagnetic bearing according to any one of claims 1 to 3, characterized in that the warp of the coils (100) is made from an assembly (1') composed of a plurality of grouped wires connected in parallel (1).

5. Electromagnetic bearing according to any one of claims 1 to 4, characterized in that said insulated conducting wire (1) comprises a conducting core (10, 11) having a diameter equal to or less than 1 mm.

6. Electromagnetic bearing according to any one of claims 1 to 5, characterized in that the insulating strip (2) has a thickness of a few tenths of a millimeter and a width of about a few millimeters.

7. Electromagnetic bearing according to any one of claims 1 to 6, characterized in that blotter-forming ceramic (3) or glass-wool is in addition provided over the side parts of the coil (100), between the ends of the strip (2) of insulating material.

8. Electromagnetic bearing according to claim 2, characterized in that said nickel-plated copper wire (1) insulated by a ceramic layer comprises an additional outer coating of varnish to prevent the ceramic layer from becoming detached during winding.

9. Electromagnetic bearing according to any one of claims 1 to 8, characterized in that the wire of the warp (1) and the tape of the weft (2) of the coil (100) are woven loosely, in order to provide interstices which help the penetration of the molding cement.

## Patentansprüche

1. Elektromagnetisches, zur Anordnung in einer Umgebung auf hoher Temperatur bestimmtes Lager mit Elektromagneten, deren jeder aus einer aus in einem Hochtemperaturzement eingeformten Leitern (1) gebildeten Wicklung (100) und einem Anker (6) aus ferromagnetischem Material besteht, dadurch gekennzeichnet, daß jede Wicklung (100) durch Weben gefertigt ist und eine aus wenigstens einem isolierten Leiterdraht (1) gebildete Kette und einen aus einem Band (2) aus Isoliermaterial gebildeten Schuß aufweist.

2. Elektromagnetisches Lager nach Anspruch 1, dadurch gekennzeichnet, daß der isolierte Leiterdraht (1) aus einem durch eine Keramikschicht (12) isolierten, vernickelten Kupferdraht (10, 11) besteht.

3. Elektromagnetisches Lager nach Anspruch 1 oder Anspruch 2, dadurch gekennzeichnet, daß das Isoliermaterialband (2) aus einem Glasfasergeflecht besteht.

4. Elektromagnetisches Lager nach einem der Ansprüche 1 bis 3, dadurch gekennzeichnet, daß die Kette der Wicklung (100) aus einer Gruppe (1') mehrerer parallel angeordneter und geschalteter Drähte (1) gefertigt ist.

5. Elektromagnetisches Lager nach einem der Ansprüche 1 bis 4, dadurch gekennzeichnet, daß der isolierte Leiterdraht (1) eine leitende Seele (10, 11) aufweist, deren Durchmesser unter oder gleich 1 mm ist.

6. Elektromagnetisches Lager nach einem der Ansprüche 1 bis 5, dadurch gekennzeichnet, daß das Isolierband (2) eine Dicke der Größenordnung von einigen Zehnern von mm und eine Breite der Größenordnung von einigen mm aufweist.

7. Elektromagnetisches Lager nach einem der Ansprüche 1 bis 6, dadurch gekennzeichnet, daß außerdem Keramik (3) in Form von Blatt oder Wolle aus Glas auf den seitlichen Teilen der Wicklung (100) zwischen den Enden des Isolierbandes (2) angeordnet ist.

8. Elektromagnetisches Lager nach Anspruch 2, dadurch gekennzeichnet, daß der durch eine Keramikschicht isolierte, vernickelte Kupferdraht (1) mit einer Lackschicht bedeckt ist, die zum Vermeiden der Ablösung der Keramikschicht beim Wickelvorgang bestimmt ist.

9. Elektromagnetisches Lager nach irgendeinem der Ansprüche 1 bis 8, dadurch gekennzeichnet, daß der Kettdraht (1) und das Schußband (2) der Wicklung (100) in lockerer Weise gewebt sind, um Zwischenräume vorzusehen, die das Eindringen des Einformungszements erleichtern.

Fig. 1

Fig. 2

Fig. 3

Fig. 4

Fig. 5

Fig. 6

Fig. 7